Europäisches Patentamt

European Patent Office

Office européen des brevets

(19)

(11) EP 0 546 891 B1

(12) FASCICULE DE BREVET EUROPEEN

(45) Date de publication et mention
de la délivrance du brevet:
15.01.1997 Bulletin 1997/03

(51) Int Cl.⁶: **G02F 1/29**, G02F 1/37,
H01S 3/109, H01S 3/11

(21) Numéro de dépôt: 92403243.6

(22) Date de dépôt: 01.12.1992

(54) **Doubleur de fréquence comprenant un réseau d'indice optique commandable électriquement**

Frequenzverdoppelungsvorrichtung unter Verwendung eines elektrisch steuerbaren optischen Indexgitters

Frequency doubling device using an electrically driven optical index grating

(84) Etats contractants désignés:
DE GB SE

(30) Priorité: 10.12.1991 FR 9115277

(43) Date de publication de la demande:
16.06.1993 Bulletin 1993/24

(73) Titulaire: THOMSON-CSF
75008 Paris (FR)

(72) Inventeurs:
• Delacourt, Dominique
F-92402 Courbevoie Cédex (FR)
• Papuchon, Michel
F-92402 Courbevoie Cédex (FR)
• Lallier, Eric
F-92402 Courbevoie Cédex (FR)
• Armani, Florence
F-92402 Courbevoie Cédex (FR)

(74) Mandataire: Guérin, Michel et al
THOMSON-CSF-S.C.P.I.,
13, Avenue du Président
Salvador Allende
94117 Arcueil Cédex (FR)

(56) Documents cités:
EP-A- 0 442 779          WO-A-90/04807
FR-A- 2 385 114          US-A- 3 611 231
US-A- 4 865 406

• SOVIET JOURNAL OF QUANTUM
ELECTRONICS. vol. 16, no. 12, Décembre 1986,
NEW YORK US pages 1678 - 1679
A.A.BLISTANOV 'MODULATION AND
CONVERSION OF LIGHT...'
• SOVIET JOURNAL OF QUANTUM
ELECTRONICS. vol. 8, no. 9, Septembre 1978,
NEW YORK US pages 1078 - 1081 V.I.BALAKSHII
'AMPLITUDE MODULATION OF LIGHT...'
• APPLIED PHYSICS LETTERS. vol. 57, no. 20,
Novembre 1990, NEW YORK US pages 2074 -
2076 C.J.VAN DER POEL & AL 'EFFICIENR TYPE
I BLUE SEVOND HARMONIC..'
• APPLIED PHYSICS LETTERS. vol. 58, no. 24,
Juin 1991, NEW YORK US pages 2732 - 2734
K.MIZUUCHI & AL 'SECOND-HARMONIC
GENERATION OF BLUE LIGHT...'
• APPLIED PHYSICS LETTERS. vol. 34, no. 1,
Janvier 1979, NEW YORK US pages 60 - 62
N.UESUGI & AL 'ELECTRIC FIELD RUNING OF
SECOND HARMONIC...'

## Description

Le domaine de l'invention est celui des réseaux de diffraction fréquemment utilisés en optique et notamment pour coupler de la lumière au sein d'un guide. En effet grâce à sa périodicité le réseau est capable de générer plusieurs ordres diffractés dans des directions différentes à partir d'une seule onde incidente, permettant un accord de phase entre les ondes se propageant à l'extérieur du guide et celles se propageant selon les modes de guide. Lorsque le réseau est obtenu par variation périodique d'indice, l'efficacité à coupler l'énergie lumineuse d'une onde incidente vers des ordres de diffraction, dépend directement de l'amplitude de cette variation. Il est ainsi connu qu'en agissant de manière dynamique sur l'indice de réfraction du matériau utilisé, il est possible de modifier l'efficacité du réseau. Pour cela, une des solutions actuelles consiste à mettre en jeu l'effet électrooptique permettant d'agir électriquement sur la variation d'indice du réseau, le caractère périodique de l'indice à modifier est alors respecté en utilisant un peigne d'électrodes interdigitées permettant de créer au niveau d'un matériau susceptible d'être le siège d'effets électrooptiques d'indice optique n, des zones d'indice n+ $\Delta$ n et des zones d'indice n- $\Delta$n, grâce à des électrodes portées à un potentiel +V et des électrodes portées à un potentiel -V.

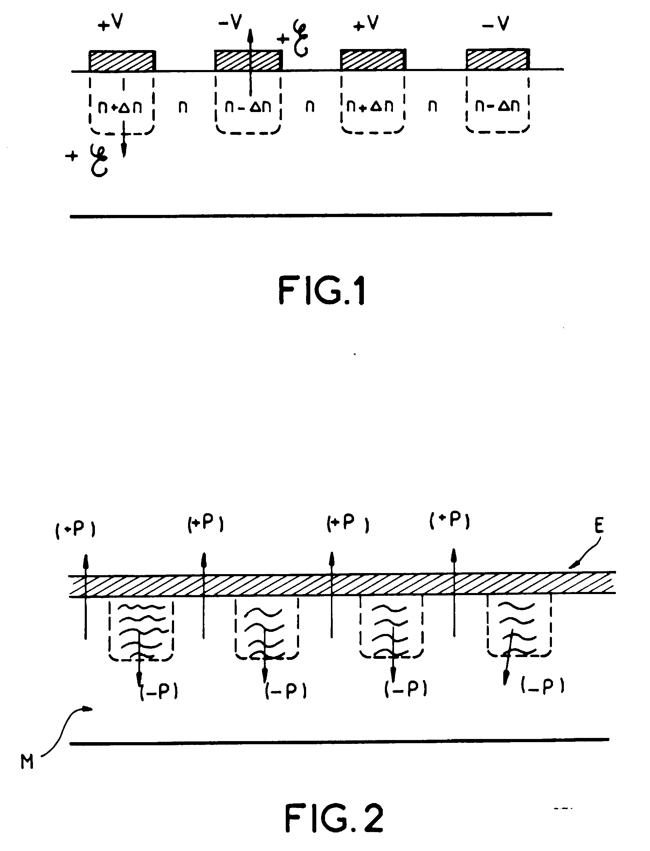

La figure 1 illustre ce type de structure dans laquelle il est possible de générer des zones d'indice n+ $\Delta$n, séparées de zones d'indice n- $\Delta$ n, par des zones d'indice n, grâce au champ $\xi$ appliqué.

Typiquement il peut s'agir d'un guide d'onde réalisé par les techniques connues, au sein d'un cristal de niobate de lithium dont l'axe optique c est perpendiculaire au plan du guide. En considérant que seul le champ appliqué grâce à des électrodes interdigitées et colinéaire à l'axe c est responsable de la variation d'indice $\Delta$ n, on obtient le réseau d'indice optique de la figure 1.

Cependant le handicap majeur d'un tel réseau d'indice optique réside dans la complexité des électrodes à réaliser qui induit des problèmes liés aux effets de pointe entre électrodes qui conduisent pour des tensions importantes, à la destruction du guide ou des électrodes elles-mêmes. Par ailleurs, une architecture compliquée d'électrodes représente un frein à l'utilisation du réseau à des fréquences très élevées.

C'est pourquoi l'invention propose un réseau d'indice optique utilisant des électrodes continues homogènes et un matériau susceptible d'être le siège de retournement de polarisation établi préalablement par différentes techniques.

En effet, il est possible dans certains matériaux d'induire localement un retournement des domaines ferroélectriques par des traitements spécifiques. On dispose alors d'un matériau présentant des zones de polarisation + P et des zones de polarisation - P présentant des susceptibilités non linéaires d'ordre 2 opposées (ces susceptibilités non linéaires étant en particulier responsables de la génération de seconde harmonique et de l'effet électrooptique). Ainsi en créant des zones de polarisation (+P) et des zones de polarisation (-P) on crée en appliquant un champ électrique sur ces zones, des domaines de coefficients électrootiques + r et - r capables d'induire des variations d'indice respectivement + $\Delta$n et -$\Delta$n, en effet r et A n sont liés par la formule suivante :

$$\Delta n = \frac{1}{2} n^3 r \xi$$

ou n est l'indice optique du milieu

r est le coefficient électrooptique
$\xi$ le champ électrique appliqué sur le matériau. L'intérêt d'utiliser une électrode continue et un matériau présentant localement des retournements de polarisation réside dans le fait de ne pas avoir de réseau permanent tel que celui élaboré avec des électrodes interdigitées qui affecte même sans tension les propriétés optiques du matériau sous-jacent (M). Notons qu'en effet le retournement de polarisation induit pas ou très peu de variation d'indice optique du matériau (M) (selon les procédés de retournement de polarisation) et que la variation d'indice recherchée pour l'élaboration du réseau est introduite par effet électrooptique. Sans tension on dispose ainsi d'un matériau recouvert d'une électrode, l'ensemble étant pratiquement parfaitement homogène.

FR-A-2 385 114 divulgue un dispositif pour la génération de l'harmonique deux par quasi-accord de phase comprenant quatre éléctrodes permettant un réglage fin de la longueur de cohérence. WO 90/04 807 divulgue également un dispositif pour la génération de l'harmonique deux par quasi-accord de phase du type défini dans la première partie de la revendication 1. Dans le cas de ce dispositif de l'état de la technique connu, il n'y a pas d'électrodes permettant de compenser électrooptiquement les variations d'indice de réfraction entre les domaines ferroélectriques ayant une direction de polarisation différente.

Plus précisément l'invention a pour objet un doubleur de fréquence sans variations d'indice de réfraction entre les domaines ferroélectriques.

Cette objet est résolu, selon l'invention, avec un dispositif comprenant les caractéristiques techniques comme définies dans la revendication 1.

Le matériau (M) peut avantageusement être un cristal de niobate de lithium, le renversement de polarisation ferroélectrique pouvant être obtenu dans ce cas par diffusion locale de titane sur une des faces du cristal. Le matériau (M) peut être également un cristal de tantalate de lithium ou bien l'oxyde $KTiOPO_4$.

Il peut encore s'agir d'un matériau de type polymère comprenant des groupes fortement polaires intermoléculaires ou intramoléculaires orientables sous champ électriques. On peut dans ce cas appliquer à l'aide de peignes d'électrodes interdigitées un champ électrique préalable, capable d'induire la formation des domaines (+P) et des domaines (-P), lesdits peignes pouvant être supprimés ultérieurement et remplacés par une électrode continue.

L'invention a aussi pour objet un laser en mode déclenché comme défini dans la revendication 10.

L'invention sera mieux comprise et d'autres avantages apparaîtront à la lecture de la description qui va suivre et des figures annexées parmi lesquelles :

- la figure 1 illustre un réseau d'indice optique selon l'art connu utilisant des électrodes interdigitées ;
- la figure 2 schématise un exemple de réseau d'indice optique utilisé dans l'invention réalisé par diffusion de titane dans un cristal de nitobate de lithium ;
- la figure 3 illustre un exemple de guide d'onde muni d'une structure de réseau de diffraction selon l'invention, ledit guide étant inscrit dans le matériau (M) par traitement préalable.

Le réseau d'indice optique, utilisé dans l'invention, commandable électriquement nécessite l'emploi d'un matériau (M) capable d'être le siège de retournement de polarisation par traitement adapté. Le cristal de niobate de lithium répond très bien à cet impératif. En effet, il est connu pour les effets optiques non linéaires qu'il génère et il a été observé qu'une diffusion locale de titane sur une des faces du cristal (plus précisément sur la face C+ de ce cristal) conduisait à un retournement des domaines ferroélectriques.

Il est à ainsi possible grâce à des moyens connus de photolithographie de réaliser dans un cristal de niobate de lithium, un réseau constitué de bandes de titane perpendiculaires au plan du matériau (M) comme l'illustre la figure 2. Les bandes de titane qui génèrent le retournement de polarisation sont représentées par les zones notées (-P), séparées entre elles par du niobate de lithium schématisé par les zones notées (+P). Pour mettre en jeu l'effet électrooptique capable d'introduire des variations d'indice, on dépose sur l'ensemble des domaines (+P) et (-P) un électrode E en regard de ces domaines, une autre électrode étant située sur le matériau (M) (mais pouvant être sur une surface exempte de retournement de domaines ferroélectriques) pour permettre l'application d'un champ électrique localement parallèle au grand axe des bandes de polarisation (-P).

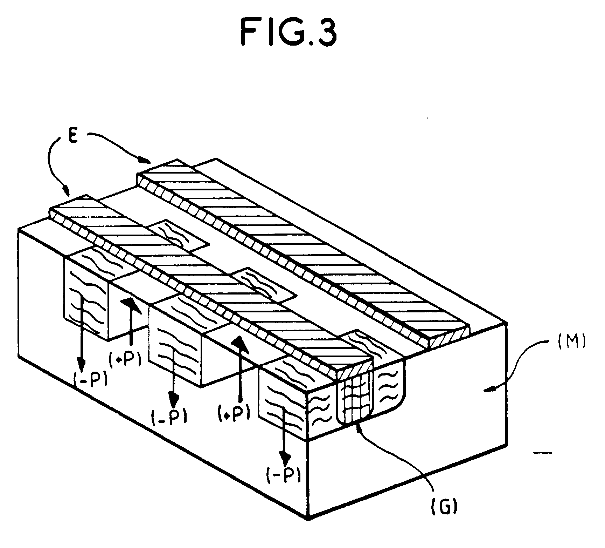

Avec les moyens de lithographie actuels et la technologie associée au niobate de lithium, on est capable de réaliser des réseaux de renversement au pas d'environ 2 μm. La diffusion du titane s'effectuant à une température voisine de 1000°C, il est ensuite possible de créer au niveau du réseau de diffraction, un guide bidimensionnel grâce à un échange protonique des ions lithium Li+ effectué aux alentours de 200° à 300°C ; l'inscription du guide (G) au niveau du réseau est représentée à la figure 3. Ce type de structure est particulièrement intéressante et permet donc d'appliquer un champ électrique parallèlement à l'axe C du cristal. Ainsi en l'absence de tension appliquée entre les électrodes, le réseau est susceptible de transmettre intégralement un faisceau incident introduit par la tranche. Par contre, sous tension appliquée, le réseau d'indice apparaît et diffracte l'onde incidente en plusieurs ordres de diffraction, avec des angles de diffractions différents. Cette possibilité de diffracter la lumière guidée se traduit donc par une diminution de cette lumière guidée, l'efficacité globale dépendant de la longueur d'interaction entre le guide et le réseau créé, lui-même dépendant de la variation d'indice obtenue liée à la tension appliquée. Avec une telle structure il est alors possible de moduler les pertes par diffraction d'une onde guidée et par conséquent de moduler l'amplitude de cette onde. On peut ainsi avantageusement utiliser un cristal de niobate de lithium dopé avec des ions néodim $Nd^{3+}$ ou erbium $E_r^{3+}$ susceptible d'être le siège d'effet laser. Par les traitement spécifiques décrits antérieurement on réalise localement un retournement de polarisation ferroélectrique et l'on délimite la partie guide d'onde. Les faces d'entrée et de sortie du guide ainsi obtenu, peuvent être traitées de manière à rendre possible l'oscillation d'une onde engendrée par le pompage optique généralement obtenu par une diode laser. On est ainsi en mesure, grâce au réseau d'indice optique de faire fonctionner un laser solide classique en mode déclenché ("Q-switch") par modulation de l'onde guidée amplifiée par effet laser.

Dans le cas de doubleurs de fréquence pour lesquels il est nécessaire de trouver une configuration optique qui permette l'accord de phase entre l'onde à la fréquence $\omega$ se propageant avec un vecteur d'onde $k_\omega$ et l'onde à la fréquence $2\omega$ se propageant avec un vecteur d'onde $k_{2\omega}$, ces vecteurs d'onde étant reliés aux indices optiques par les relations ci-dessous :

$$k_\omega = 2 \pi n_\omega / \lambda_\omega$$

$$k_{2\omega} = 2 \times 2 n_{2\omega} / \lambda_\omega$$

avec

$n_\omega$ l'indice du milieu à la fréquence $\omega$
$n_{2\omega}$ l'indice du milieu à la fréquence $2\omega$
$\lambda_\omega$ la longueur d'onde à la fréquence $\omega$

En général $n_{2\omega}$ est différent de $n_\omega$ et le déphasage existant entre onde incidente et l'onde harmonique créée limite de façon redhébitoire l'efficacité de conversion. On appelle longueur de cohérence $L_c$, la longueur au bout de laquelle ce déphasage atteint $\pi$. $L_c$ étant ainsi définie $(k_{2\omega} - 2k_\omega) L_c = \pi$ d'où $L_c = \lambda_\omega / 4 (n_{2\omega} - n_\omega)$

Pour contourner ce problème, une solution consiste à utiliser une perturbation périodique qui permette l'accord de phase artificiel ou encore appelé le quasi-accord de phase, il s'agit pour cela de réaliser la condition suivante $k_{2\omega} - 2k_\omega = mK$
où m est un entier et $K = 2\pi/\Lambda$ avec $\Lambda$ pas du réseau créé.

Il est notamment possible de créer ce réseau en induisant un retournement périodique de polarisation et plus particulièrement par diffusion de titane dans le cas d'un cristal de niobate de lithium connu pour ses propriétés performantes en génération de seconde harmonique. La variation d'indice induite étant certes très faible entre domaine (+P) et domaines (-P), il résulte néanmoins de cette minime variation d'indice, une légère diffraction des ondes pompe Op et harmonique (fréquence double) $0_h$ entraînant la diminution du rendement de l'onde Op en onde $0_h$. En considérant que l'indice des domaine (+P) est n, et l'indice des domaines (-P) est n + $\Delta$n en l'absence de champ appliqué, il est possible de compenser cette variation d'indice $\Delta$n par l'application d'un champ électrique $\xi$ capable de créer une variation $\Delta$n' :

Dans les domaines (+P) l'indice devient n+ $\Delta$n'
Dans les domaines (-P) l'indice devient n+$\Delta$n - $\Delta$n'

On cherche donc à obtenir l'égalité suivante :

$$n +\Delta n' = n +\Delta n - \Delta n'$$

$$\Delta n' = \frac{\Delta n}{2}$$

si n est de l'ordre de $10^{-4}$ (cas du titane diffusé dans un cristal de niobate de lithium), seuls quelques volts appliqués permettent de compenser la faible variation d'indice due à la périodicité des domaines (+P) et (-P).

Le réseau d'indice commandable électriquement utilisé dans l'invention peut également être réalisé avec d'autres cristaux inorganiques de type $LiTaO_3$ ou $KTiOPO_4$. Dans le cas du tantane de lithium le retournement de polarisation peut être obtenu par échange protonique vers 600°C, ou bien en appliquant un champ électrique aux alentours de la température de transition de Curie (620°C) à l'aide d'électrodes interdigitées pouvant être supprimées ultérieurement.

Dans le cas de l'oxyde $KTiOPO_4$, on peut induire un retournement de polarisation par échange ionique des ions K+ par des ions Rb+ en présence d'oxyde de baryum $RbNO_3$, vers 350°C,

On peut encore réaliser le réseau utilisé dans l'invention en utilisant des polymères comprenant des groupements intermoléculaires ou intramoléculaires actifs présentant une forte polarisation. On peut créer des domaines (+P) et des domaines (-P) en appliquant un champ électrique à l'aide d'électrodes interdigitées qui pourront être remplacées par une électrode continue en vue de l'obtention du réseau selon l'invention.

## Revendications

1. Doubleur de fréquence par quasi-accord de phase comprenant un substrat d'un matériau électro-optique (M) ayant une polarisation ferroélectrique, la polarisation ferroélectrique dans ledit substrat étant localement renversée périodiquement de façon à générer alternativement des premiers domaines (+P) avec une polarisation ferroélectrique P et un indice de réfraction n et des deuxièmes domaines (-P) avec une polarisation ferroélectrique -P et un indice de réfraction n + $\Delta$n
caractérisé en ce que
ledit doubleur comprend en outre deux électrodes (E) dont au moins une est en regard des premiers domaines (+P) et des deuxièmes domaines (-P), lesdites électrodes permettant par l'application d'un champ électrique de compenser électrooptiquement les variations d'indice de réfraction $\Delta$n entre les premiers et deuxièmes domaines.

2. Doubleur de fréquence selon la revendication 1, caractérisé en ce que le matériau (M) est un cristal de niobate de lithium.

3. Doubleur de fréquence selon la revendication 2, caractérisé en ce que le renversement de polarisation ferroélectrique est obtenu par diffusion locale de titane sur une des faces du cristal.

4. Doubleur de fréquence selon la revendication 1, caractérisé en ce que le matériau (M) est un cristal de tantalate de lithium.

5. Doubleur de fréquence selon la revendication 4, caractérisé en ce que le renversement de polarisation est obtenu par échange protonique des ions Li+.

6. Doubleur de fréquence selon la revendication 1, caractérisé en ce que la matériau (M) est l'oxyde $KTiOPO_4$.

7. Doubleur de fréquence selon la revendication 6, caractérisé en ce que le renversement de polarisation est obtenu par échange ionique d'ions K+ par des ions Rb+ en présence d'oxyde de baryium.

8. Doubleur de fréquence selon la revendication 1, caractérisé en ce que le matériau (M) est un polymère possédant des groupements intermoléculaires ou des groupements intramoléculaires pouvant être orientés sous champ électrique.

9. Doubleur de fréquence selon la revendication 8, caractérisé en ce que le renversement de polarisation est obtenu par application d'un champ électrique sur un peigne d'électrodes interdigitées déposé à la surface du matériau (M), ledit peigne étant supprimé pour être remplacé par une électrode continue (E).

10. Laser en mode déclenché comprenant une cavité, caractérisé en ce qu'une structure de doubleur selon l'une des revendications 1 à 9 fait partie de ladite cavité, le laser étant tel qu'une tension $V_1$ applicable sur les électrodes génère des pertes de l'onde guidée par diffraction et tel qu'une tension $V_2$ applicable sur les électrodes compense électrooptiquement les variations d'indice entre les premiers domaines (+P) et les deuxièmes domaines (-P).

**Patentansprüche**

1. Frequenzverdoppler durch Quasi-Phasenanpassung, mit einem Substrat aus einem elektrooptischen Material (M), das eine ferroelektrische Polarisation besitzt, wobei die ferroelektrische Polarisation in dem Substrat lokal periodisch umgekehrt wird, derart, daß abwechselnd erste Bereiche (+P) mit einer ferroelektrischen Polarisation P und einem Brechungsindex n und zweite Bereiche (-P) mit einer ferroelektrischen Polarisation -P und einem Brechungsindex n + $\Delta$n erzeugt werden, dadurch gekennzeichnet, daß der Verdoppler außerdem zwei Elektroden (E) enthält, wovon sich wenigstens eine gegenüber den ersten Bereichen (+P) und den zweiten Bereichen (-P) befindet, wobei die Elektroden ermöglichen, durch Anlegen eines elektrischen Feldes die Schwankungen des Brechungsindexes $\Delta$n zwischen dem ersten und dem zweiten Bereich elektrooptisch zu kompensieren.

2. Frequenzverdoppler nach Anspruch 1, dadurch gekennzeichnet, daß das Material (M) ein Lithiumniobat-Kristall ist.

3. Frequenzverdoppler nach Anspruch 2, dadurch gekennzeichnet, daß die Umkehrung der ferroelektrischen Polarisation durch lokale Diffusion von Titan in eine der Flächen des Kristalls erhalten wird.

4. Frequenzverdoppler nach Anspruch 1, dadurch gekennzeichnet, daß das Material (M) ein Lithiumtantalat-Kristall ist.

5. Frequenzverdoppler nach Anspruch 4, dadurch gekennzeichnet, daß die Polarisationsumkehrung durch Austausch von Protonen durch $L_i^+$ erhalten wird.

6. Frequenzverdoppler nach Anspruch 1, dadurch gekennzeichnet, daß das Material (M) das Oxid $KTiOPO_4$ ist.

7. Frequenzverdoppler nach Anspruch 6, dadurch gekennzeichnet, daß die Polarisationsumkehr durch Ionenaustausch von $K^+$-Ionen durch $Rb^+$-Ionen in Gegenwart von Bariumoxid erhalten wird.

8. Frequenzverdoppler nach Anspruch 1, dadurch gekennzeichnet, daß das Material (M) ein Polymer ist, das intermolekulare Ballungen oder intramolekulare Ballungen besitzt, die im elektrischen Feld orientierbar sind.

9. Frequenzverdoppler nach Anspruch 8, dadurch gekennzeichnet, daß die Polarisationsumkehr durch Anlegen eines elektrischen Feldes an einen Kamm von interdigital angeordneten Elektroden erhalten wird, der auf die Oberfläche des Materials (M) aufgebracht ist, wobei der Kamm entfernt wird, um durch eine ununterbrochene Elektrode (E) ersetzt zu werden.

10. Laser im Auskopplungsmodus, der einen Hohlraum enthält, dadurch gekennzeichnet, daß eine Verdopplerstruktur nach einem der Ansprüche 1 bis 9 einen Teil des Hohlraums bildet, wobei der Laser von der Art ist, daß eine Spannung $V_1$, die an die Elektroden angelegt werden kann, Verluste der durch Beugung geführten Welle erzeugt und eine Spannung $V_2$, die an die Elektroden angelegt werden kann, die Index-Schwankungen zwischen den ersten Bereichen (+P) und den zweiten Bereichen (-P) elektrooptisch kompensiert.

**Claims**

1. Frequency doubler, employing phase quasi-tuning, comprising a substrate of an electrooptical material (M) having a ferroelectric polarization, the ferroelectric polarization in the said substrate being locally reversed periodically so as alternately to generate first domains, with a ferroelectric polarization P and a refractive index n, and second domains (-P) with a ferroelectric polarization -P and a refractive index n+$\Delta$n, characterized in that the said doubler furthermore comprises two electrodes (E), at least one of which faces the first domains (+P) and the second domains (-P), the said electrodes making it possible, by applying an electric field, to electrooptically compensate for the variations $\Delta$n in refractive index between the first and second domains.

2. Frequency doubler according to Claim 1, characterized in that the material (M) is a lithium niobate crystal.

3. Frequency doubler according to Claim 2, characterized in that the ferroelectric polarization reversal is obtained by local diffusion of titanium on one of the faces of the crystal.

4. Frequency doubler according to Claim 1, characterized in that the material (M) is a lithium tantalate crystal.

5. Frequency doubler according to Claim 4, characterized in that the polarization reversal is obtained by proton exchange of $Li^+$ ions.

6. Frequency doubler according to Claim 1, characterized in that the material (M) is the oxide $KTiOPO_4$.

7. Frequency doubler according to Claim 6, characterized in that the polarization reversal is obtained by ion exchange of $K^+$ ions by $Rb^+$ ions in the presence of barium oxide.

8. Frequency doubler according to Claim 1, characterized in that the material (M) is a polymer having intermolecular groups or intramolecular groups which can be oriented under the effect of an electric field.

9. Frequency doubler according to Claim 8, characterized in that the polarization reversal is obtained by applying an electric field onto an interdigital electrode comb deposited at the surface of the material (M), the said comb being removed to be replaced by a continuous electrode (E).

10. Q-switched mode laser comprising a cavity, characterized in that a doubler structure according to one of Claims 1 to 9 forms part of the said cavity, the laser being such that a voltage $V_1$ which can be applied to the electrodes generates diffraction losses in the guided wave, and such that a voltage $V_2$ which can be applied to the electrodes electrooptically compensates for the variations in index between the first domains (+P) and the second domains (-P).

**FIG.1**

**FIG.2**

# FIG.3